**Europäisches Patentamt**

**European Patent Office**

**Office européen des brevets**

(19)

(11) Veröffentlichungsnummer: **0 063 315**
**B2**

(12)

# NEUE EUROPÄISCHE PATENTSCHRIFT

(45) Veröffentlichungstag der neuen Patentschrift:
12.04.89

(51) Int. Cl.⁴: **B 23 Q 11/00**

(21) Anmeldenummer: **82102947.7**

(22) Anmeldetag: **06.04.82**

(54) Spänefördeter für Werkzeugmaschinen.

(30) Priorität: **15.04.81 DE 3115335**

(43) Veröffentlichungstag der Anmeldung:
**27.10.82 Patentblatt 82/43**

(45) Bekanntmachung des Hinweises auf die Patenterteilung:
**30.07.86 Patentblatt 86/31**

(45) Bekanntmachung des Hinweises auf die Entscheidung
über den Einspruch:
**12.04.89 Patentblatt 89/15**

(84) Benannte Vertragsstaaten:
**CH FR GB LI SE**

(56) Entgegenhaltungen:
**DE-A- 3 036 031**
**US-A- 1 912 622**
**US-A- 3 478 377**

**WERKSTATT UND BETRIEB, Band 112, Nr. 1, Januar
1979, München, K.v. WIETERSHEIM "Späneentsorgung
an spanenden Werkzeugmaschinen", Seiten 25-28
Mayfran-Streiflichter, Nr. 13, Mai 1974**

(73) Patentinhaber: **Oerlikon-Boehringer GmbH, Stuttgarter
Strasse 50 Postfach 220, D-7320 Göppingen (DE)**

(72) Erfinder: **Gloser, Wolfgang, Blumenstrasse 22,
D-7321 Börtlingen (DE)**
Erfinder: **Kuhn, Siegfried, Kornbergstrasse28/I,
D-7321 Dürnau (DE)**
Erfinder: **Räder, Robert, St.-Galler-Strasse 17,
D-7320 Göppingen-Faurndau (DE)**
Erfinder: **Setzer, Friedhelm, Nördl. Ringstrasse 6,
D-7320 Göppingen (DE)**
Erfinder: **Kienhöfer, Hermann, Laichingerstrasse 21,
D-7320 Göppingen (DE)**

(74) Vertreter: **Vogeser, Werner, Dipl.-Ing. et al,
Patentanwälte Hansmann & Vogeser
Albert-Rosshaupter-Strasse 65,
D-8000 München 70 (DE)**

## Beschreibung

Die Erfindung betrifft einen Späneförderer entsprechend dem Oberbegriff des Patentanspruchs 1.

Ein derartiger Späneförderer ist aus Mayfran-Streiflichter, Nr. 13, Mai 1974, bzw. aus der Zeitschrift «Werkstatt und Betrieb», Band 112, Nr. 1, Januar 1979, Seiten 25 bis 28, bekannt. Bei diesem Späneförderer ist das Fördergerüst zusammen mit dem Maschinengrundbett einstückig aus dem gleichen Material gegossen und weist die für das Förderband erforderlichen Rollenlaufflächen auf. Diese Ausbildung erfordert die Bearbeitung der Rollenlaufflächen an dem als Gussteil ausgebildeten Maschinenbett, aber auch dessen zweiteilige Ausführung, um die Bearbeitung der Rollenlaufflächen durchführen zu können.

Der Erfindung liegt die Aufgabe zugrunde, den Späneförderer der eingangs genannten Art möglichst einfach herstell-, montier- und demontierbar auszubilden.

Gelöst wird diese Aufgabe gemäss der Erfindung durch die im kennzeichnenden Teil des Patentanspruchs 1 angegebenen Merkmale.

Zweckmässige Ausgestaltungen der Erfindung ergeben sich aus den Unteransprüchen.

Die vorgeschlagene Ausbildung hat den Vorteil, dass bei in üblicher Weise als Zusatzeinrichtungen hergestellten Späneförderern diese nicht mehr von der Vorderseite oder stirnseitig unter bzw. in den Maschinengrundkörper geschoben und montiert werden müssen, wofür ein erheblicher Platzbedarf erforderlich ist, sondern das Fördergerüst bereits herstellerseitig fest im Maschinengrundkörper integriert wird.

Dies kann dadurch geschehen, dass das Fördergerüst als Kern zum Giessen des Maschinengrundbettes verwendet wird. Das Maschinengrundbett kann dabei in bekannter Weise aus Beton gegossen werden. Anwenderseitig ist es dann nur mehr erforderlich, den Abwurfteil und das Umlenkstück des Förderbandes stirnseitig am Fördergerüst zu befestigen; dies kann ohne grösseren Platzbedarf anwenderseitig an dem einen oder anderen Maschinenende erfolgen.

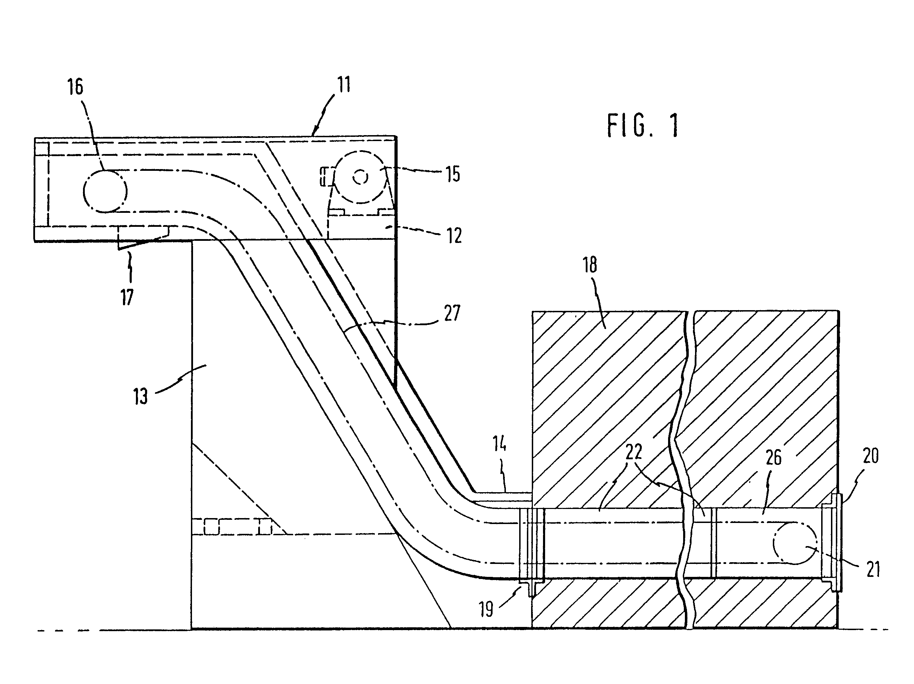

Die Erfindung wird nachstehend anhand der Fig. 1 bis 3 beispielsweise erläutert. Es zeigt:

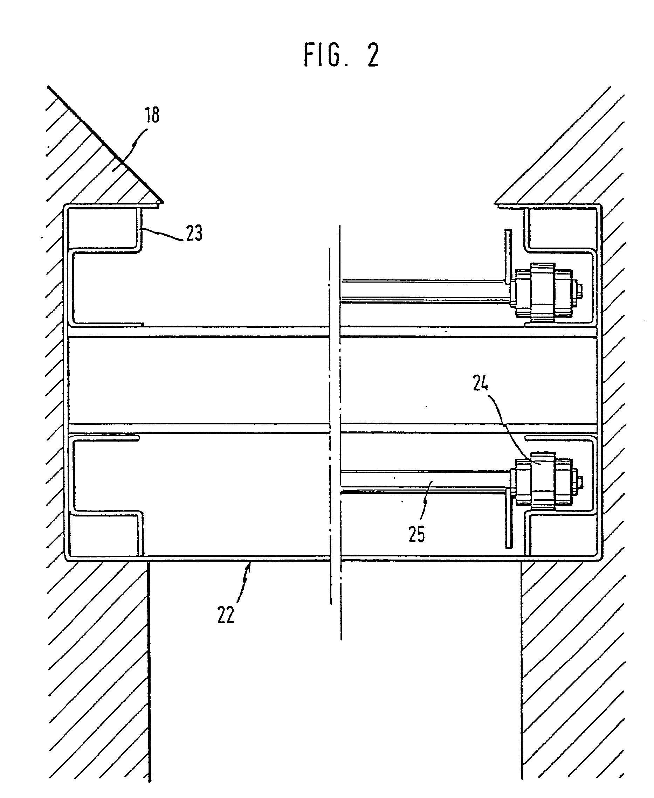

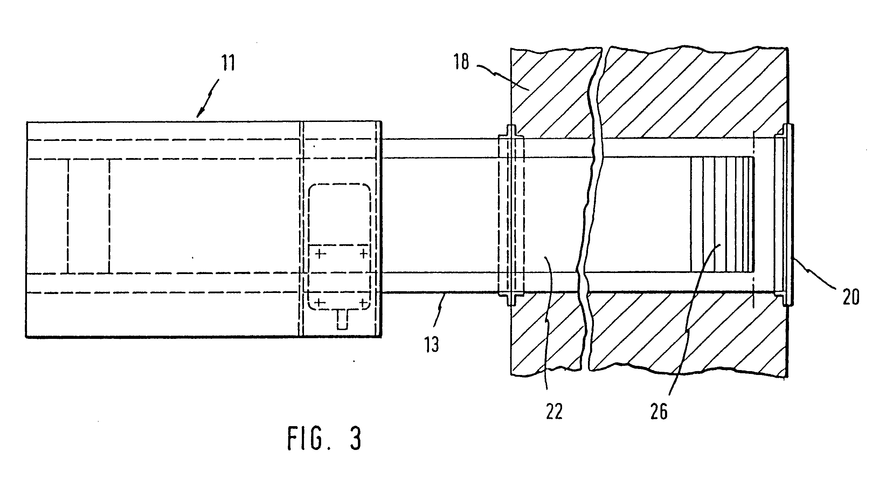

Figur 1 eine Seitenansicht des Förderers, Figur 2 einen Querschnitt des in einer Maschine fest montierten Fördergerüsts und Figur 3 eine Aufsicht des Förderers.

Der Förderer besteht, wie Fig. 1 zeigt, aus einem Abwurfteil 11 mit einem Kopfstück 12, in dem sich ein Elektromotor 15 zum Antrieb des schematisch gezeigten Förderbandes sowie eine Umlenkrolle 16 für das Förderband befindet. Die Abgabe der Späne erfolgt über einen an der Unterseite des Kopfstücks 12 befindlichen Abwurf 17.

Der Abwurfteil 11 hat weiterhin einen Unterteil 13, der den Abwurfteil 11 trägt, sowie einen Flanschteil 14 zur Verbindung mit dem im Maschinengrundkörper 18 fest montierten Fördergerüst 22. Mit diesem Fördergerüst ist der Flanschteil 14 durch einen Flansch 19 verbunden.

Das Fördergerüst 22 besteht, wie Fig. 2 zeigt, aus einem Gehäuse mit Führungsschienen 23, in denen Rollen 24 mit Rollenachsen 25 für das Förderband 27 angeordnet werden können.

Das Umlenkstück 26 (Fig. 3) des Förderers ist innerhalb des Fördergerüsts 22 und innerhalb des Maschinengrundkörpers 18 angeordnet und von aussen durch ein abnehmbares Verschlussteil 20 zugänglich.

Die Verbindung des Flanschteils 14 mit dem Fördergerüst 22 erfolgt vorzugsweise flüssigkeitsdicht, um die Verwendung eines Kühlmittels zu ermöglichen.

Wenn eine spiegelbildlich umgekehrte Anordnung des Förderers erwünscht ist, ist es nur erforderlich, Umlenkstück und Abwurfteil des Förderers entsprechend umgekehrt zu montieren und anschliessend das Förderband einzuziehen.

Der in der beschriebenen Weise ausgebildete Späneförderer kann ohne Platzschwierigkeiten jederzeit montiert werden. Die Lagerhaltung ist wegen des geringen Platzbedarfs günstig, da nur Abwurfteil und Förderband gelagert werden müssen.

## Patentansprüche

1. Späneförderer an einer Werkzeugmaschine, insbesondere Drehmaschine, bestehend aus einem Fördergerüst (22) und einem mit diesem lösbar verbundenem Abwurfteil (11), wobei das Fördergerüst fest im Maschinengrundkörper (18) integriert ist und ein Gehäuse für den Späneförderer bildet, mit einer Umlenkrolle (21) an einem Ende, dadurch gekennzeichnet, dass sich das als gesondertes Teil ausgebildete Fördergerüst (22) über die gesamte Länge des Maschinengrundkörpers (18) erstreckt, dass das Abwurfteil (11) mittels eines Flansches (19) mit dem Fördergerüst (22) verbunden ist, dass das Abwurfteil (11) wahlweise an beiden Enden des Maschinengrundkörpers (18) mit dem Fördergerüst (22) verbindbar ist, dass die Umlenkrolle (21) innerhalb eines Umlenkstückes (26) gelagert ist und dass eine weitere Umlenkrolle (16) am entsprechend anderen Ende des Fördergerüstes (22) ausserhalb des Maschinengrundkörpers (18) lösbar angeordnet ist.

2. Späneförderer nach Anspruch 1, dadurch gekennzeichnet, dass die Verbindung zwischen dem Fördergerüst (22) und dem Abwurfteil (11) luft- und/oder flüssigkeitsdicht ist.

3. Späneförderer nach Anspruch 1 oder 2, dadurch gekennzeichnet, dass das Umlenkstück (26) am freien Ende durch ein abnehmbares Verschlussteil (20) verschlossen ist.

4. Späneförderer nach einem der Ansprüche 1 bis 3, dadurch gekennzeichnet, dass das Gehäuse Führungsschienen (23) für die Laufrollen (24) eines Förderbandes (27) aufweist.

## Claims

1. Swarf conveyor on a machine tool, especially a lathe, comprising a conveyor frame (22) and a discharge part (11) removably connected thereto, in which the conveyor frame is irremovably integrated in the machine base part (18) and forms a housing for the swarf conveyor with a reversal roller (21) at one end, characterised in that the conveyor frame (22), formed as a separate part, extends over the entire length of the machine base part (18), the discharge part (11) is connected to the conveyor frame (22) by means of a flange (19), the discharge part (11) can be connected to the conveyor frame (22) selectively at each end of the machine base part (18), the reversal roller (21) is journalled inside a reversal part (26) and a further reversal roller (16) is removably mounted at the other end of the conveyor frame (22) outside the machine base part (18).

2. Swarf conveyor according to claim 1, characterised in that the connection between the conveyor frame (22) and the discharge part (11) is sealed against air and/or liquids.

3. Swarf conveyor according to claim 1 or 2, characterised in that the reversal part (26) is closable at its free end by a removable closure part (20).

4. Swarf conveyor according to any of claims 1 to 3, characterised in that the housing has guide rails (23) for the rollers (24) of a conveyor belt.

## Revendications

1. Transporteur de copeaux pour une machine-outil, en particulier machine rotative, constitué par une structure de transport (22) et par une partie de décharge (11) reliée amoviblement à celle-ci, la structure de transport étant intégrée fixement dans le corps de base (18) de la machine et formant un boîtier pour le transporteur, avec un rouleau de changement de direction (21) à une extrémité, caractérisé en ce que la structure de transport (22) formée comme une pièce séparée s'étend sur toute la longueur du corps de base (18) de la machine, en ce que la partie de décharge (11) est reliée à la structure de transport (22) au moyen d'une bride (19), en ce que la partie de décharge (11) peut être connectée au choix à la structure de transport (22) aux deux extrémités du corps de base (18) de la machine, en ce que le rouleau de changement de direction (21) est monté dans une pièce de changement de direction (26), et en ce qu'un autre rouleau de changement de direction (16) est disposé amoviblement à l'autre extrémité correspondante de la structure de transport (22) en dehors du corps de base (18) de la machine.

2. Transporteur de copeaux selon la revendication 1, caractérisé en ce que la liaison entre la structure de transport (22) et la partie de décharge (11) est étanche à l'air et/ou aux liquides.

3. Transporteur de copeaux selon l'une des revendications 1 ou 2, caractérisé en ce que la pièce de changement de direction (26) est fermée à l'extrémité libre par une pièce de fermeture amovible (20).

4. Transporteur de copeaux selon l'une des revendications 1 à 3, caractérisé en ce que le boîtier présente des rails de guidage (23) pour les rouleaux mobiles (24) d'une bande transporteuse (27).

FIG. 1

EP 0 063 315 B2

# FIG. 2

FIG. 3

0 063 315 B2